# EUROPÄISCHE PATENTSCHRIFT

(11) **EP 2 976 801 B1**
(45) Veröffentlichungstag und Bekanntmachung des Hinweises auf die Patenterteilung: **11.01.2017**
(21) Anmeldenummer: 14710880.7
(22) Anmeldetag: 17.03.2014
(51) Int. Cl.: H01M 10/613, H01M 10/6551, H01M 10/6557, H01M 10/6556, F28D 21/00, F28F 3/04, F28F 3/12, F28F 21/06, H01M 8/04007, F28F 13/00

(54) **TEMPERIERELEMENT**
TEMPERATURE CONTROL ELEMENT
ÉLÉMENT D'ÉQUILIBRAGE DE TEMPÉRATURE

(30) Priorität: 20.03.2013 EP 13160172
(43) Veröffentlichungstag der Anmeldung: 27.01.2016
(73) Patentinhaber: BASF SE, 67056 Ludwigshafen am Rhein (DE)
(72) Erfinder: BAUMGART, Patrick, 67724 Gonbach (DE); KRAEMER, Oliver, 67578 Gimbsheim (DE)
(86) Internationale Anmeldenummer: PCT/EP2014/055340
(87) Internationale Veröffentlichungsnummer: WO 2014/147037

(56) Entgegenhaltungen:
- EP-A1- 0 065 679
- EP-A1- 2 418 717
- DE-A1-102009 058 808
- DE-U1-202006 017 181
- GB-A- 1 501 084
- JP-A- 2006 351 561
- US-A1- 2007 062 674

## Beschreibung

Die vorliegende Erfindung betrifft ein Temperierelement mit einer thermisch leitenden Oberfläche und einer thermisch isolierenden Oberfläche sowie ein Verfahren zu dessen Herstellung und die Verwendung des Temperierelements in Lithium-Ionen-Batterien.

Temperierelemente, insbesondere Kühlelemente, sind aus dem Stand der Technik prinzipiell bekannt und werden für verschiedene wärmeabgebende Baugruppen wie Batterien, Brennstoffzellen, Halbleiterbauelemente oder elektrische Komponenten eingesetzt. So wird in DE 10 2007 034 740 A1 eine Brennstoffzelleneinheit beschrieben, bei der an der Polplatte eine Kühleinrichtung zum Kühlen des Stromabgriffs angeordnet ist, um eine Austrocknung der Membran durch einen Wärmeeintrag von außen zu verhindern, wobei die Kühleinrichtung einen Kühlkanal für ein Kühlmedium aufweist. Ferner beschreibt DE 11 2007 000 829 T5 einen Kühler für einen Stromrichter, wobei der Kühler ein Substrat zur Anordnen eines wärmeerzeugenden Elements, ein Wärmeabgabebauteil und zwei Strömungsweg-Gestaltungsbauteile aufweist, so dass ein Kühlmittel mit dem Wärmeabgabebauteil in Kontakt treten kann. DE 10 2009 058808 A1 offenbart ein weiteres Temperierelement aus dem Stand der Technik.

Insbesondere für die Kühlung von Lithium-Ionen-Batterien wurden in den vergangenen Jahren verschiedene Konzepte vorgeschlagen. Lithium-Ionen-Batterien stellen eine Schlüsselkomponente für elektrische Energiespeicher dar, wie sie beispielsweise für Hybrid- oder Elektrofahrzeuge verwendet werden. Lithium-Ionen-Batterien sind herkömmlichen elektrischen Energiespeichersystemen durch ihre höhere Leistungs- und Energiedichte, sehr kompakte Abmessungen, einen hohen Lade- und Entladewirkungsgrad sowie ihre hohe Zyklierfähigkeit überlegen. Allerdings arbeiten Lithium-Ionen-Batterien nur in einem Temperaturfenster zwischen - 10 °C und 40 °C effizient. Über 40 °C wird die Lebensdauer deutlich verringert, während unter - 10 °C die Leistung nachlässt und der Wirkungsgrad deutlich sinkt. Folglich ist eine ausreichende thermische Konditionierung von Lithium-Ionen-Batterien notwendig, um einen zufriedenstellenden Ausgleich zwischen den Anforderungen an die Lebensdauer und den Wirkungsgrad zu erfüllen.

Nach dem Stand der Technik (vgl. bspw. "Thermomanagement bei Hybridfahrzeugen", Behr GmbH & Co. KG, Stuttgart, Technischer Pressetag 2009; "Hoffnungsträger Lithium-Batterie", Fraunhofer-Gesellschaft, Presseinformation 15.03.2012) wurde bislang vorgeschlagen, Lithium-Ionen-Batterien beziehungsweise die in diesen angeordneten einzelnen Lithium-Ionen-Zellen mit gekühlter Luft zu temperieren oder einen zusätzlichen Verdampfer in Form einer Kühlplatte in der Batterie anzuordnen oder einen Wärmeüberträger einzusetzen, um mit Hilfe eines verdampfenden Kältemittels in einem Sekundärkreislauf die Batterien, bzw. die Zellen zu kühlen. Diese Kühlkonzepte haben trotz vieler Vorteile auch Nachteile, so dass der Bedarf für ein verbessertes Temperierelement besteht. Während im Stand der Technik in der Regel Kühlsysteme für Batterien beziehungsweise andere wärmeerzeugende Komponenten beschrieben werden, ist es nicht möglich, diese Systeme auch zum Beheizen beispielsweise von Lithium-Ionen-Batterien einzusetzen, wenn die Betriebstemperatur unter -10 °C fällt.

Ein weiteres Problem, das vom Stand der Technik bislang nicht zufriedenstellend gelöst wurde, besteht in den eingesetzten Materialien. Während für Lithium-Ionen-Batterien häufig mit einem Kühlmedium durchflossene Metallrohre, beispielsweise Aluminiumflachrohre, verwendet werden, auf welche eine Metallplatte, beispielsweise eine Aluminiumplatte, aufgelötet ist, auf die wiederum die einzelnen Lithium-Ionen-Zellen aufgeklebt werden, bleibt die elektrische Isolierung, das heißt, insbesondere die elektrische Durchschlagsfestigkeit, der Kühlplatte ungelöst. Andererseits besteht bei elektrisch isolierenden Materialien wie Kunststoff das Problem, die Wärme von der Lithium-Ionen-Zelle durch den elektrisch und thermisch isolierenden Werkstoff auf das Kühlmedium zu übertragen. Bei Kühlplatten aus Kunststoff sind gewisse minimale Schichtdicken fertigungstechnisch bedingt, die in ihrer Dimension den Wärmeübergang behindern.

Die Aufgabe der vorliegenden Erfindung besteht folglich darin, ein Temperierelement zu schaffen, das die Nachteile des Standes der Technik überwindet und eine zufriedenstellende Temperierung bei gleichzeitig guter elektrischer Isolation bietet. Es ist ferner Aufgabe der vorliegenden Erfindung, ein Verfahren zur Herstellung eines solchen Kühlelements anzugeben sowie eine Lithium-Ionen-Batterie unter Verwendung des Kühlelements bereitzustellen.

Die erste Aufgabe wird bei einem Temperierelement der eingangs genannten Art dadurch gelöst, dass eine Materialkombination aus metallischer Platte und Kunststoffgrundkörper vorgesehen wird, wobei das Temperierelement von einem Temperiermedium in darin vorgesehenen Kanälen durchflossen werden kann.

Die zweite Aufgabe wird durch ein Verfahren zur Herstellung eines Temperierelements gelöst, bei dem eine metallische Platte zunächst mit einem Kunststoff für einen Grundkörper umgeben wird, so dass mindestens ein Kanal für ein Temperiermedium gebildet wird, und abschließend durch Anbringen von Anschlussbauteilen das Temperierelement fertiggestellt wird.

In einem ersten Aspekt der vorliegenden Erfindung wird die vorstehend genannte erste Aufgabe insbesondere durch ein Temperierelement (1) mit einer thermisch leitenden Oberfläche (3) und einer thermisch isolierenden Oberfläche (5) gelöst, das
- eine flächig ausgebildete metallische Platte (7), die an der thermisch leitenden Oberfläche (3) angeordnet ist und die an ihrer der thermisch leitenden Oberfläche (3) zugewandten Seite Erhebungen (9) aufweist,
- einen Grundkörper (11) aus Kunststoff, der im Wesentlichen auf der Seite der thermisch isolierenden Oberfläche (5) angeordnet ist und der die metallische Platte (7) zumindest teilweise umgibt,
   wobei zwischen der metallischen Platte (7) und dem Grundkörper (11) zumindest ein durchgehender Kanal (13) zur Aufnahme eines Temperiermediums in direktem Kontakt mit der metallischen Platte (7) derart ausgebildet ist, dass zumindest eine Wand des zumindest einen Kanals (13) durch die metallische Platte (7) gebildet wird und die übrigen Wände des zumindest einen Kanals (13) durch den Grundkörper (11) gebildet werden, wobei sich der zumindest eine Kanal (13) von einer Stirnseite (15a) zu einer gegenüberliegenden Stirnseite (15b) des Grundkörpers (11) erstreckt,
- zwei Anschlussbauteile (17a, 17b) aus Kunststoff, die jeweils an den Stirnseiten (15a, 15b) angeordnet sind und den zumindest einen Kanal (13) an einen Temperiermedium-Kreislauf anschließen,
   wobei das Temperierelement (1) so ausgebildet ist, dass der Grundkörper (11) die metallische Platte (7) an ihrer der thermisch leitenden Oberfläche (3) zugewandten Seite zumindest in den Bereichen bedeckt die keine Erhebungen (9) aufweisen, und dass der Grundkörper (11) die metallische Platte (7) randseitig zumindest teilweise umgibt,
umfasst.

Der vorliegenden Erfindung liegt die Erkenntnis zugrunde, dass durch eine spezielle Kombination aus metallischer Platte (7) und Kunststoffgrundkörper (11) ein optimaler Ausgleich zwischen einem guten Wärmeübergang von einem zu temperierenden Gegenstand auf ein Temperiermedium einerseits und ausreichender elektrischer Isolierung anderseits realisiert werden kann. Zudem wird durch die erfindungsgemäße Kombination ein Leichtbau-Temperierelement geschaffen.

Es wurde überraschenderweise herausgefunden, dass mit dem erfindungsgemäßen Temperierelement (1) ein zu temperierender Gegenstand nicht nur zuverlässig und den äußeren Umständen entsprechend gekühlt werden kann, sondern dass es auch möglich ist, den zu temperierenden Gegenstand in gewissen Grenzen zu erwärmen, beispielsweise um auch bei tiefen Umgebungstemperaturen eine optimale Betriebstemperatur einstellen zu können. Hierzu wird das durch den zumindest einen Kanal (13) fließende Temperiermedium außerhalb des Temperierelements in seiner Temperatur entsprechend eingestellt. Zur optimalen Temperierung eines Gegenstands weist die metallische Platte (7) an ihrer der thermisch leitenden Oberfläche (3) zugewandten Seite Erhebungen (9) auf, die eine thermische Brücke in dem Grundkörper (11) aus Kunststoff darstellen.

Im Folgenden wird die Erfindung weiter präzisiert.

Unter einer "thermisch leitenden Oberfläche" wird im Sinne der vorliegenden Erfindung die Seite des Temperierelements (1) verstanden, welche im Wesentlichen mit einem zu temperierenden Gegenstand (oder mehreren) in Kontakt tritt. An der thermisch leitenden Oberfläche (3) findet der Wärmeübergang zwischen dem zu temperierenden Gegenstand und dem Temperiermedium statt. Demgegenüber wird unter einer "thermisch isolierenden Oberfläche" die andere Seite des Temperierelements (1) verstanden, die im Wesentlichen von dem Grundkörper (11) aus Kunststoff gebildet wird.

Die Formulierung "eine metallische Platte (7), die an der thermisch leitenden Oberfläche (3) angeordnet ist" ist in der Weise zu verstehen, dass die metallische Platte (7) die thermisch leitende Oberfläche (3) zumindest teilweise bildet, direkt in der Nähe der thermisch leitenden Oberfläche (3) liegt oder mindestens in großer Nähe dazu beabstandet ist.

Die metallische Platte (7) ist im flächig ausgebildet, vorzugsweise in einer rechteckigen Grundform, wobei die Länge und Breite der metallischen Platte (7) um ein Vielfaches größer sind als ihre Dicke. In einer bevorzugten Ausführungsform hat die metallische Platte (7) Abmessungen zwischen 8 cm x 5 cm und 800 cm x 500 cm.

Die Erhebungen (9), welche die metallische Platte (7) aufweist, können eine beliebige geometrische Form aufweisen. Aus fertigungstechnischen Gründen haben sich jedoch im Wesentlichen rechteckige geometrische Formen für die Erhebung (9) als sinnvoll erwiesen.

In der erfindungsgemäßen Kombination aus metallischer Platte (7) und Kunststoffgrundkörper (11) dient die metallische Platte (7) der Wärmeleitung, während der Kunststoff der elektrischen Isolierung dient und die mechanische Festigkeit sowie die Dichtigkeit des Temperierelements (1) gewährleistet. Daher sind die Dimensionen des Grundkörpers (11) so gewählt, dass sie zusammen mit dem gewählten Kunststoff eine ausreichende mechanische Festigkeit ergeben. Es hat sich als vorteilhaft erwiesen, wenn der Grundkörper (11) eine Dicke zwischen 0,5 cm und 10 cm, bevorzugt zwischen 1 cm und 3 cm hat.

Der Kunststoff des Grundkörpers (11) umgibt die metallische Platte (7) zumindest teilweise, das heißt, er bedeckt zumindest die Bereiche der metallischen Platte (7) an ihrer der thermisch leitenden Oberfläche (3) zugewandten Seite, die keine Erhebungen aufweisen. Zudem umschließt der Kunststoff des Grundkörpers (11) die metallische Platte (7) zumindest an zwei gegenüberliegenden Rändern, so dass die metallische Platte (7) fest in dem Kunststoffgrundkörper (11) gehalten wird. Neben der mechanischen Halterung der metallischen Platte (7) wird durch das Umschließen mit dem Kunststoff zudem auch randseitig eine elektrische Isolierung gewährleistet. Die zumindest zwei gegenüberliegenden Ränder, die mit dem Kunststoff umschlossen werden, erstrecken sich insbesondere zwischen den Stirnseiten (15a, 15b).

Im Inneren des Temperierelements (1) ist zumindest ein durchgehender Kanal (13) vorgesehen, durch den ein Temperiermedium fließen kann. Der Kanal (13) erstreckt sich von einer Stirnseite (15a) zu der gegenüberliegenden Stirnseite (15b) und ist so ausgebildet, dass zumindest eine Wand des Kanals (13) von der metallischen Platte (7) gebildet wird, während die übrigen Wände durch den Kunststoffgrundkörper (11) gebildet werden. Durch diese Anordnung wird sichergestellt, dass das Temperiermedium in direktem Kontakt mit dem gut wärmeleitenden Metall der Platte (7) steht, so dass ein optimaler Wärmeübergang gewährleistet ist. Die Kanalwände müssen nicht zwingend geradlinig und/oder eben ausgeführt sein. Abhängig von der Einbaugeometrie des Temperierelements (1) können die Kanäle auch in geschwungener Form verlaufen und/oder die Kanalwände eine Krümmung aufweisen. Zudem muss der Kanalquerschnitt nicht zwingend rechteckig ausgeführt sein, sondern kann prinzipiell jede beliebige geometrische Form haben.

An den Stirnseiten (15a, 15b), zwischen denen sich zumindest ein Kanal (13) erstreckt, sind jeweils Anschlussbauteile (17a, 17b) aus Kunststoff angeordnet. Die Formulierung "den zumindest einen Kanal (13) an einen Temperiermedium-Kreislauf anschließen" wird im Sinne der vorliegenden Erfindung so verstanden, dass die Anschlussbauteile (17a, 17b) für das in dem zumindest einen Kanal (13) fließende Temperiermedium einen Sammler und/oder einen Verteiler bilden. In anderen Worten bedeutet das, dass das Temperiermedium über eines der Anschlussbauteile (17a, 17b) dem zumindest einen Kanal (13) zugeführt wird und durch das gegenüberliegende Anschlussbauteil (17a, 17b) wieder abgeleitet wird. Das Anschlussbauteil kann jeweils aber auch zur Umlenkung des Temperiermediums von einem ersten Kanal in dem Temperierelement (1) in mindestens einen weiteren Kanal (13) des Temperierelements (1) dienen.

Der Begriff "Temperierelement", wie er hier verwendet wird, ist im Sinne der vorliegenden Erfindung so zu verstehen, dass das Temperierelement (1) sowohl zum Kühlen als auch zum Erwärmen eines Gegenstandes, der auf der thermisch leitenden Oberfläche (3) angeordnet ist, geeignet ist. Wenn in der vorliegenden Erfindung von einem zu temperierenden Gegenstand die Rede ist, schließt dies den Fall nicht aus, dass auch zwei oder mehr Gegenstände temperiert werden können.

In einer Weiterbildung des erfindungsgemäßen Temperierelements (1) liegen die Erhebungen (9) in der thermisch leitenden Oberfläche (3) frei. Hierdurch wird ein besonders guter Wärmeübergang zwischen einem zu temperierenden Gegenstand und dem Temperiermedium geschaffen. Zur elektrischen Isolierung eines zu temperierenden Gegenstands gegenüber einem in dieser Weise ausgestalteten Temperierelement (1) muss der Gegenstand mit einem Kontaktmaterial auf dem Temperierelement befestigt werden, der die elektrische Isolierung sicherstellt. Beispielsweise kann in einer speziellen Ausführungsform eine einzelne Batteriezelle mit ihrem zumindest teilweise metallischen Gehäuse mittels eines elektrisch isolierenden Klebers am Temperierelement (1) befestigt werden. Gegebenenfalls ist es hierzu erforderlich, die metallische Oberfläche der Platte (7) und/oder der einzelnen Zelle/n mit einem Haftvermittler zu behandeln.

In einer alternativen Weiterbildung des erfindungsgemäßen Temperierelements (1) sind die Erhebungen (9) in der thermisch leitenden Oberfläche (3) vom dem Kunststoff des Grundkörpers (11) bedeckt. Hierdurch wird ohne weitere Maßnahmen eine ausreichende elektrische Isolierung zwischen dem zu temperierenden Gegenstand und der metallischen Platte (7) sichergestellt. Soll beispielsweise eine Batteriezelle auf das Temperierelement (1) aufgeklebt werden, erübrigt sich in dieser Ausführungsform in der Regel die Anwendung eines Haftvermittlers. Die Schichtdicke des Kunststoffs auf den Erhebungen (9) ist vorzugsweise 1,0 mm oder weniger, insbesondere 0,7 mm oder weniger, und mindestens 0,3 mm.

In einer erfindungsgemäßen Ausgestaltung weist die metallische Platte (7) randseitig zumindest teilweise eine Sicke (19a) und/oder eine Nut (19b) auf, wodurch eine formschlüssige Verbindung zwischen dem Kunststoffgrundkörper (11) und der metallischen Platte (7) sichergestellt wird. Die Sicke/n (19a) und/oder die Nut/en (19b) erstrecken sich insbesondere zwischen den Stirnseiten (15a, 15b).

Es ist bevorzugt, dass die metallische Platte (7) im Bereich der Erhebung (9) eine Dicke von 1 mm bis 5 mm und in den Bereichen ohne Erhebung (9) eine Dicke von 0,5 mm bis 3 mm aufweist. Metallische Platten (7) mit geringerer Dicke sind schwierig herzustellen und weisen nur eine unzureichende mechanische Festigkeit auf, während metallische Platten (7) mit größerer Dicke das Volumen des Temperierelements (1) sowie die Materialkosten unnötig erhöhen.

Es hat sich für einen optimalen Wärmeübergang zwischen einem zu temperierenden Gegenstand und einem Temperiermedium als vorteilhaft herausgestellt, wenn die Erhebungen (9) auf der metallischen Platte (7) im Wesentlichen gleichmäßig verteilt sind. Zusätzlich oder alternativ können die Erhebungen (9) auf der metallischen Platte (7) so angeordnet sein, dass sie im Wesentlichen mit den Bereichen eines zu temperierenden Gegenstands korrespondieren, die am intensivsten zu temperieren sind. Ferner können die Erhebungen (9) auf der metallischen Platte (7) vorteilhafterweise so angeordnet sein, dass sie im Wesentlichen mit dem zumindest einen Kanal (13) korrespondieren, so dass für den Wärmeübergang zwischen zu temperierendem Gegenstand und Temperiermedium ein möglichst kurzer Weg hergestellt wird.

In einer weiteren Ausführungsform ist in der metallischen Platte (7) in den Bereichen ohne Erhöhung (9) zumindest eine durchgehende Aussparung (21) vorgesehen, die von dem Kunststoff des Grundkörpers (11) durchdrungen ist. Unter "durchgehende Aussparung" wird prinzipiell ein Loch beliebiger Geometrie verstanden, durch das beim Herstellungsvorgang des Temperierelements (1) der Kunststoff in den unteren Teil der Form eingebracht werden kann. Es kann zudem vorteilhaft sein, mehr als eine Aussparung (21) vorzusehen, so dass beim Herstellungsvorgang der Kunststoff möglichst gleichmäßig verteilt über die metallische Platte (7) in den unteren Teil der Form eingebracht wird. Neben diesem fertigungstechnischen Vorteil ergibt sich zudem eine bessere formschlüssige Verbindung zwischen Kunststoffgrundkörper (11) und metallischer Platte (7), wenn der Kunststoff die metallische Platte (7) durchdringt.

Ferner können in der metallischen Platte (7) zusätzlich Fließhilfen in Form von Vertiefungen oder Sicken angeordnet sein, welche die Verteilung des Kunststoffs bei der Herstellung erleichtern und gleichmäßiger gestalten. Zudem können diese Vertiefungen oder Sicken die mechanische Festigkeit der metallischen Platte (7) erhöhen.

Aus Gründen der Gewichtseinsparung und aufgrund sehr guter Wärmeleitfähigkeit hat es sich als vorteilhaft erwiesen, wenn die metallische Platte (7) Aluminium enthält. Insbesondere kann die metallische Platte (7) aus einer Aluminiumbasislegierung bestehen.

Es ist bevorzugt, den Kunststoff des Grundkörpers (11) aus Polyamiden, Polyestern, Polyphenylsulfonen (PPSU), Polysulfonen (PSU) oder Polyethersulfonen (PESU) auszuwählen Diese Kunststoffe weisen einerseits eine gute Verarbeitbarkeit auf und geben andererseits dem Temperierelement (1) eine ausreichende mechanische Festigkeit. Unter den Polyamiden sind PA6, PA6.6, PA6.10, PA6.6/6.10, PA6/6T und Polyphthalamid (PPA) besonders bevorzugt. Unter den Polyestern ist Polybutylenterephthalat (PBT) besonders bevorzugt.

In einer Weiterbildung der Erfindung kann der Kunststoff des Grundkörpers (11) Additive und/oder Verstärkungsstoffe enthalten. Als Additive können ferner Zähmodifikatoren, Hydrolysestabilisatoren, Wärmestabilisatoren und weitere Zusatzstoffe oder Hilfsstoffe enthalten sein. Die Verstärkungsstoffe können Glasfasern, Kohlenstofffasern, Glaskugeln oder unterschiedliche Mineralfüllungen sein.

Die Auswahl des Kunststoffs für den Grundkörper (11) in Kombination mit geeigneten Additiven und/oder Verstärkungsstoffen einerseits und der Materialauswahl für die metallische Platte (7) ermöglicht es, die thermischen Ausdehnungskoeffizienten beider Bauteile soweit aufeinander abzustimmen, dass sich bei bestimmungsgemäßem Gebrauch im Temperaturbereich zwischen - 40 °C und 85 °C mechanische Spannungen in einer Größenordnung ergeben, die für die Größe des Temperierelements tolerierbar sind bzw. durch die Geometrie ertragen werden können.

Der zumindest eine Kanal (13) des Temperierelements (1) weist vorteilhafterweise eine lichte Höhe von 3 mm bis 15 mm, bevorzugt 5 mm bis 12 mm, und eine lichte Breite von 5 mm bis 100 mm, bevorzugt 10 mm bis 30 mm auf. Durch die erfindungsgemäße Relation zwischen lichter Höhe und lichter Breite des Kanals (13) wird ein guter Fluss des Temperiermediums bei gleichzeitig optimiertem Wärmeübergang erreicht.

Um im Falle von unter Druck stehendem Kühlmedium eine gute Druckverteilung in den Kanal (13) zu gewährleisten, sind in dem Kanal (13) Einbauten (23) zur Druckverteilung vorgesehen. Alternativ oder zusätzlich können Einbauten (23) vorgesehen sein, die der Verwirbelung des Temperiermediums dienen und damit eine weiter verbesserte Temperierleistung bieten. Beide Funktionen können in einer Art von Einbauten (23) realisiert sein.

In einer speziellen Ausführungsform ist das Temperiermedium ein Kühlmittel, wie beispielsweise Glysantin^{®}, oder ein Glykol-Wasser-Gemisch, für das ein Kühlmittelkreislauf vorgesehen wird. Der Betriebsdruck solcher Kühlmittelkreisläufe liegt bei 2 bar bis 5 bar, wobei die Kreisläufe auf einen Berstdruck von bis zu 10 bar ausgelegt sind.

In einer alternativen Ausführungsform ist das Temperiermedium ein Kältemittel, wie beispielsweise 1,1,1,2-Tetrafluorethan (Handelsname "R 134a") oder 2,3,3,3-Tetrafluorpropen (Handelsname "R 1234yf", Fa. Honeywell). Solche Kältemittel werden in einem thermodynamischen Prozess durch entsprechenden Druck verdampft und teilweise gasförmig, teilweise flüssig in den Kanal 13 des Temperierelements 1 eingebracht. In dieser Ausführungsform ist das Temperierelement 1 so ausgelegt, dass es Drücken von bis zu 42 bar standhält, welche durch das gasförmige Kältemittel auftreten.

Es hat sich für eine Optimierung des Wärmeübergangs als vorteilhaft herausgestellt, wenn die Erhebungen (9) auf der metallischen Platte (7) einen Flächenanteil von 25 % bis 99 % haben.

Um das erfindungsgemäße Temperierelement (1) mit einem weiteren Temperierelement (1) oder einem alternativen Befestigungsmittel zu verbinden, ist an dem Temperierelement (1) zumindest eine Einrichtung (25) zum Verbinden vorgesehen. Solch eine Einrichtung (25) kann beispielsweise eine Vorrichtung zum Verspannen von zwei Temperierelementen (1) gegeneinander sein. Konkret können am Rand des Temperierelements (1) flanschartige Bereiche vorgesehen sein, durch welche mittels geeigneter Befestigungsmittel wie Schrauben oder Bolzen zwei Temperierelemente (1) gegeneinander verspannt werden können.

In einem zweiten Aspekt der vorliegenden Erfindung wird die vorstehend genannte zweite Aufgabe gelöst. Darin bezieht sich die vorliegende Erfindung auf ein Verfahren zur Herstellung eines Temperierelements (1), wie es vorstehend beschrieben wurde. Das Verfahren umfasst die Schritte:
- Einbringen zumindest eines Schiebers in eine erste Hälfte einer zweiteiligen Form,
- Bereitstellen einer metallischen Platte (7) in der ersten Hälfte der Form oberhalb des zumindest einen Schiebers, wobei die metallische Platte (7) an ihrer Oberseite Erhebungen (9) aufweist und wobei um die metallische Platte (7) herum ein umlaufender Spalt zu der Form freibleibt,
- Schließen der zweiteiligen Form mit einer zweiten Hälfte,
- Einbringen eines Kunststoffs in die Form durch zumindest zwei Einbringpunkte, die oberhalb der metallischen Platte (7) angeordnet sind, wobei durch das Einbringen die metallische Platte (7) auf den zumindest einen Schieber gedrückt wird und wobei der Kunststoff zumindest durch den umlaufenden Spalt in den unteren Teil der Form eingebracht wird und dabei einen Grundkörper (11) ausbildet,
- Entformen des Grundkörpers (11) mit der metallische Platte (7) und Entfernen des zumindest einen Schiebers, so dass zumindest ein durchgehender Kanal (13) gebildet wird,
- Anfügen von zwei Anschlussbauteilen (17a, 17b) aus Kunststoff jeweils an zwei gegenüberliegende Stirnseiten (15a, 15b), zwischen denen sich der zumindest ein Kanal (13) erstreckt.

Bei dem Einbringen des zumindest einen Schiebers in eine erste Hälfte einer zweiteiligen Form ist darauf zu achten, dass der Schieber nicht unter einer der Aussparungen (21) angeordnet ist und auf diese Weise das Einbringen des Kunststoffs behindert.

Die metallische Platte (7) wird in der ersten Hälfte der Form so angeordnet, dass sie oberhalb des zumindest einen Schiebers liegt, wobei die Erhebungen (9) von dem Schieber wegweisen. Hier ist darauf zu achten, dass um die metallische Platte (7) herum ein umlaufender Spalt zur Form freibleibt. Dies kann beispielsweise mit sog. verlorenen Abstandhaltern aus einem isolierenden Material (bsp. Kunststoff) sichergestellt werden. Für die gute Verteilung des Kunststoffs ist es vorteilhaft, wenn das Einbringen des Kunststoff zumindest über zwei Einbringpunkte erfolgt, die oberhalb der metallischen Platte (7) angeordnet sind. Bevorzugt sind vier Einbringpunkte oder mehr.

Für die Herstellung des Temperierelements (1) wird insbesondere ein Spritzguss-Verfahren angewendet, bei dem eine Kunststoffschmelze in eine zweiteilige Spritzgussform eingespritzt wird, bevorzugt durch die Einbringpunkte, d.h. Anspritzpunkte. Es können aber auch andere Verfahren angewendet werden, bspw. das Einbringen eines (rieselfähigen) Kunststoffgranulats, das erst in der Form aufgeschmolzen wird.

Durch das erfindungsgemäße Verfahren zur Herstellung eines Temperierelements (1) kann auf einfache und schnelle Weise das Temperierelement (1) hergestellt werden, ohne dass umfangreiche Nacharbeiten notwendig sind.

In einem weiteren Aspekt betrifft die vorliegende Erfindung die Verwendung eines Temperierelements (1), wie es vorstehend beschrieben wurde, in einer Lithium-Ionen-Batterie (101). Hier wird das Temperierelement (1) insbesondere zur Kühlung und/oder zum Beheizen von Lithium-Ionen-Zellen (103) in der Lithium-Ionen-Batterie (101) eingesetzt.

In noch einem weiteren Aspekt bezieht sich die vorliegende Erfindung auf eine Lithium-Ionen-Batterie (101), die zumindest eine Lithium-Ionen-Zelle (103), die zumindest teilweise von einer metallischen Umhüllung (105) umgeben ist, und zumindest ein Temperierelement (1), wie es vorstehend beschrieben wurde, umfasst, wobei die zumindest eine Lithium-Ionen-Zelle (103) so auf den zumindest einem Temperierelement (1) angeordnet ist, dass die metallische Umhüllung (105) in Kontakt mit der thermische leitenden Oberfläche (3) des Temperierelements (1) steht.

Das Temperierelement (1) ist insbesondere zum Temperieren von Lithium-Ionen-Batterien (101) geeignet, die aus einer oder mehreren Lithium-Ionen-Zellen (103) zusammengesetzt sind. Dabei ist es vorteilhaft, wenn die Lithium-Ionen-Zellen (103) jeweils zumindest teilweise von einer metallischen Umhüllung (105) umgeben sind. Die in den einzelnen Lithium-Ionen-Zellen (103) entstehende Wärme kann über deren metallische Umhüllung (105) an das Temperierelement (1) abgegeben werden. Dabei können die einzelnen Lithium-Ionen-Zellen (103) frei auf dem Temperierelement (1) stehen oder zwischen zwei Temperierelementen (1) verspannt sein oder an einer oder zwei Seiten an einem oder zwei Temperierelementen (1) angeklebt sein.

Die erfindungsgemäße Lithium-Ionen-Batterie (101) besitzt den Vorteil, dass die darin umfassten Lithium-Ionen-Zellen (103) optimal temperiert werden können, denn das Temperierelement (1) gewährleistet einerseits die Abfuhr von Wärme, während andererseits bei niedrigen Außentemperaturen auch ein Aufwärmen des optimalen Temperaturarbeitsbereichs gewährleistet ist.

In einer Weiterbildung umfasst die Lithium-Ionen-Batterie (101) ferner ein oder mehrere Befestigungsmittel (107), mit denen zumindest eine Lithium-Ionen-Zelle (103) mit dem zumindest ein Temperierelement (1) verbunden wird und/oder elektrische Anschlüsse (109) für die zumindest eine Lithium-Ionen-Zelle (103).

Weitere Merkmale, Vorteile und Anwendungsmöglichkeiten ergeben sich aus der nachfolgenden Beschreibung der bevorzugten, die Erfindung aber nicht einschränkenden Ausführungsbeispiele und der Figuren. Dabei bilden alle beschriebenen oder bildlich wiedergegebenen Merkmale für sich oder in beliebiger Kombination den Gegenstand der Erfindung, auch unabhängig von ihrer Zusammenfassung in den Ansprüchen oder deren Rückbeziehungen.

Es zeigen:
- Figur 1: eine schematische Teilansicht eines Temperierelements (1) in einer ersten Ausführungsform der Erfindung,
- Figur 2: eine schematische Teilansicht eines Temperierelements (1) in einer zweiten Ausführungsform der Erfindung,
- Figur 3: eine mit X in den Figuren 1 und 2 bezeichnete Teilansicht eines Temperierelements (1) gemäß der vorliegenden Erfindung,
- Figur 4: eine schematische Teilansicht eines Temperierelements (1) gemäß der vorliegenden Erfindung,
- Figur 5: eine schematische Teilansicht einer metallischen Platte (7) gemäß einer Ausführungsform der Erfindung,
- Figur 6: eine schematische Querschnittsteilansicht eines Temperierelements (1) gemäß der vorliegenden Erfindung und
- Figur 7: eine schematische Teilansicht einer Lithium-Ionen-Batterie (101).

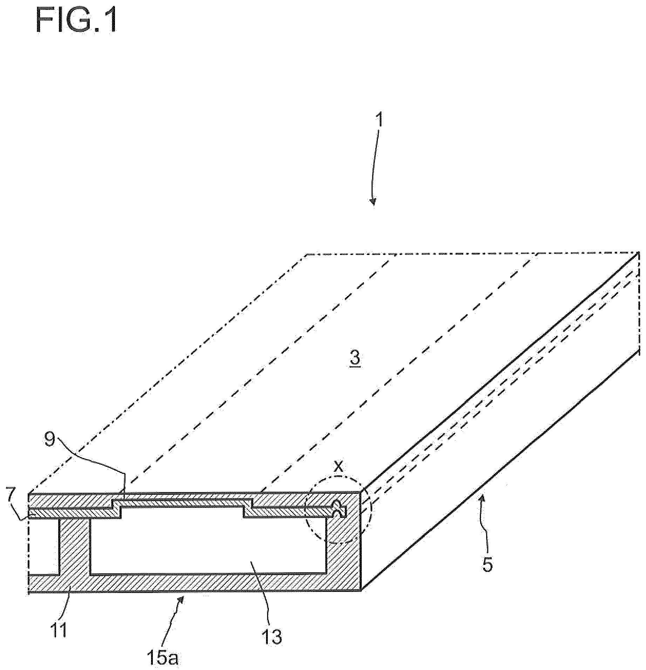

Figur 1 zeigt einen Ausschnitt einer ersten Ausführungsform des Temperierelements 1. Darin wird eine metallische Platte 7 im Wesentlichen vollständig vom Kunststoff des Grundkörpers 11 umschlossen. Das heißt, das Temperierelement 1 wir im unteren Bereich der Darstellung vollständig aus dem Kunststoff aufgebaut, während im oberen Teil des Querschnitts die metallische Platte 7 mit der Erhebung 9 dargestellt ist, die ebenfalls von dem Kunststoff überdeckt sind. In der Darstellung der Figur 1 befindet sich die thermisch leitende Oberfläche 3 oben und durch die Darstellung verdeckt auf der unteren Seite die thermisch isolierende Oberfläche 5. Aus der Figur 1 ist zu erkennen, dass der Kanal 13 auf seiner oberen Seite von der metallischen Platte 7 und im Übrigen vom Kunststoff des Grundkörpers 11 begrenzt wird.

In der Darstellung der Figur 1 wird die metallische Platte 7 als eine Platte dargestellt, in der die Erhebungen 9 beispielsweise durch Stanzen/Prägen hergestellt wurden, so dass sich gegenüber der Erhebung 9 auf der anderen Seite der metallischen Platte 7 eine Vertiefung ergibt. Die metallische Platte 7 kann jedoch auch auf andere Art und Weise hergestellt werden, beispielsweise durch Fräsen oder Strangpressen oder andere, dem Fachmann bekannten Formgebungstechniken, so dass gegenüber der Erhebung 9 eine im Wesentlichen glatte Fläche auf der Unterseite der metallischen Platte 7 ausgebildet ist.

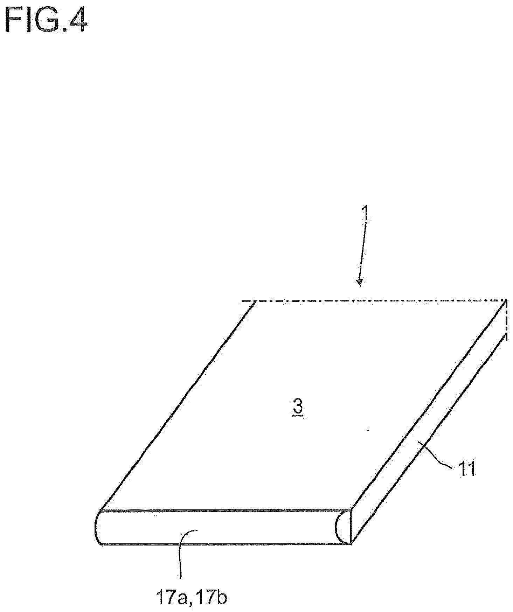

Die Ansicht der Figur 1 stellt gleichzeitig die Stirnseite 15a dar, von der aus sich zumindest ein Kanal 13 zur gegenüberliegenden Stirnseite 15 b (nicht dargestellt) erstreckt. Während die metallische Platte 7 an den Seiten vom Kunststoff des Grundkörpers 11 umgeben ist und somit eine elektrische Isolierung und damit eine ausreichende elektrische Durchschlagsfestigkeit sichergestellt sind, kann die metallische Platte 7 an den Stirnseiten 15a, 15b freiliegen, da hier noch die Anschlussbauteile 17a, 17b aus Kunststoff angeordnet werden und die freiliegende metallische Platte 7 dann abdecken und elektrisch isolieren (vgl. Figur 4).

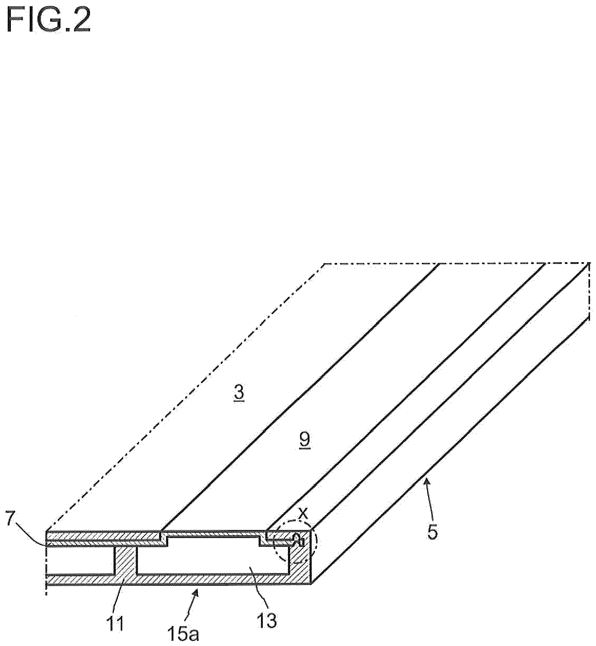

Figur 2 ist eine zu Figur 1 alternative Ausführungsform des Temperierelements 1, bei dem die Erhebung 9 nicht durch den Kunststoff des Grundkörpers 11 bedeckt ist, sondern an der thermisch leitenden Oberfläche 3 freiliegt. Ansonsten ist diese Ausführungsform gleich der ersten Ausführungsform (vgl. Figur 1).

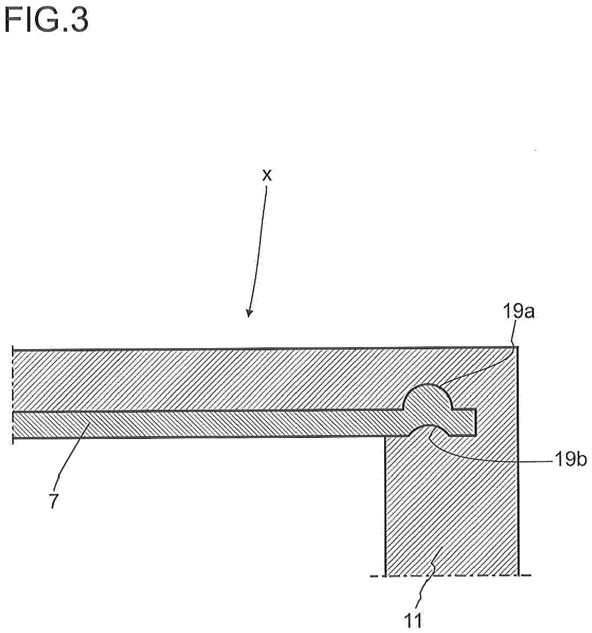

Figur 3 zeigt die in den Figuren 1 und 2 mit X bezeichneten Detailbereich. In dieser Schnittdarstellung ist ein Teil des Kunststoffgrundkörpers 11 zu sehen, der einen Randbereich der metallischen Platte 7 bedeckt, in dem eine Sicke 19a beziehungsweise eine Nut 19b ausgebildet sind. Wie der Darstellung der Figur 3 zu entnehmen ist, wird hierdurch eine formschlüssige Verbindung zwischen der metallischen Platte 7 und den Kunststoffgrundkörper 11 hergestellt.

Figur 4 zeigt eine teilweise Ansicht des Temperierelements 1 in der ersten Ausführungsform der Erfindung, bei der die Erhebungen 9 vom Kunststoff des Grundkörpers 11 bedeckt sind. Zudem ist eines der Anschlussbauteile 17a, 17b an einer der Stirnseiten 15a, 15b gezeigt. Wie vorstehend beschrieben wurde, wird hierdurch die entsprechende Stirnseite 15a, 15b abgedeckt, eine elektrische Isolierung des Randes der metallischen Platte 7 gewährleistet und ferner eine Anschluss oder eine Umlenkung bzw. Verteilung des durch den Kanal 13 fließenden Temperiermediums ermöglicht. In dieser Figur nicht dargestellt ist die Möglichkeit, dass durch eines der Anschlussbauteile 17a, 17b die Zuführung beziehungsweise Ableitung des Temperiermediums in einen Temperierkreislauf realisiert wird, der sich außerhalb des Temperierelements 1 befindet.

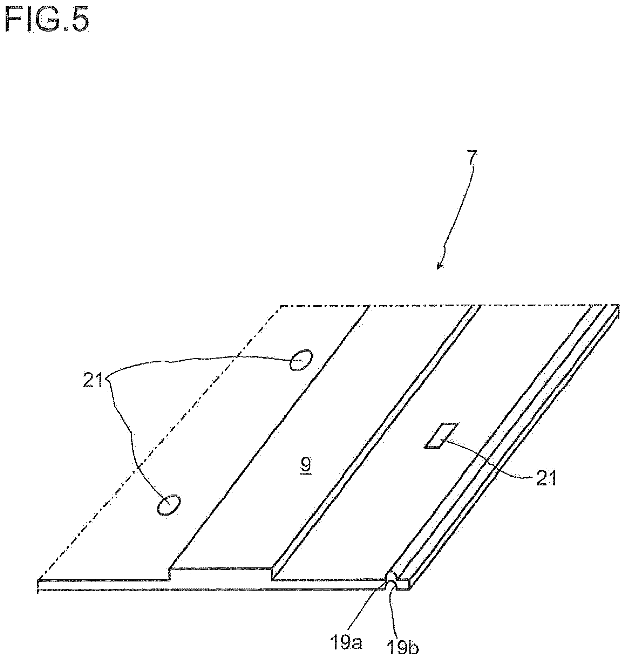

In Figur 5 ist eine spezielle Ausführungsform der metallischen Platte 7 teilweise dargestellt, die in den Bereichen ohne Erhebungen 9 eine oder mehrere durchgehende Aussparungen 21 aufweist. Diese Darstellung ist lediglich beispielhaft und zeigt verschiedene Geometrien und Anordnungen der Aussparungen 21. Zudem zeigt die Darstellung der Figur 5 die vorstehend bereits erwähnte Ausführung der metallischen Platte 7 mit einer im Wesentlichen glatten Fläche auf der gegenüberliegenden Seite der Erhebungen 9.

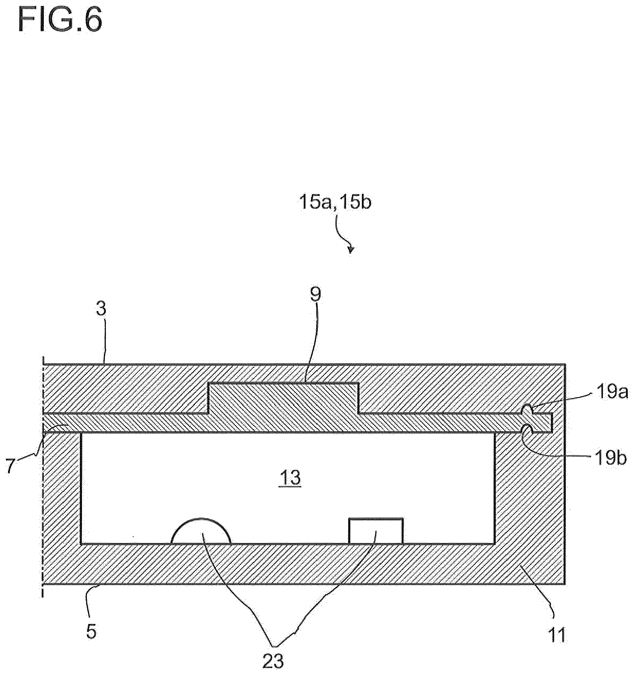

Figur 6 ist eine Querschnittsansicht des Kanals 13. Der Kanal 13 wird in der Darstellung der Figur 6 oben durch die metallische Platte 7 mit der Erhebung 9 begrenzt. Seitlich und unten ist der Kanal 13 in den Kunststoffgrundkörper 11 eingebettet. In dem Kanal 13 sind Einbauten 23 vorgesehen, die einerseits einer besseren Druckverteilung eines unter Druck stehenden Temperiermediums dienen und/oder andererseits eine Verwirbelung des fließenden Temperiermediums auf das Temperierelement 1 bewirken, so dass sich keine laminaren Strömungen hinsichtlich der Temperatur ausbilden, sondern das Temperiermedium im Wesentlichen eine gleichmäßige Temperatur aufweist.

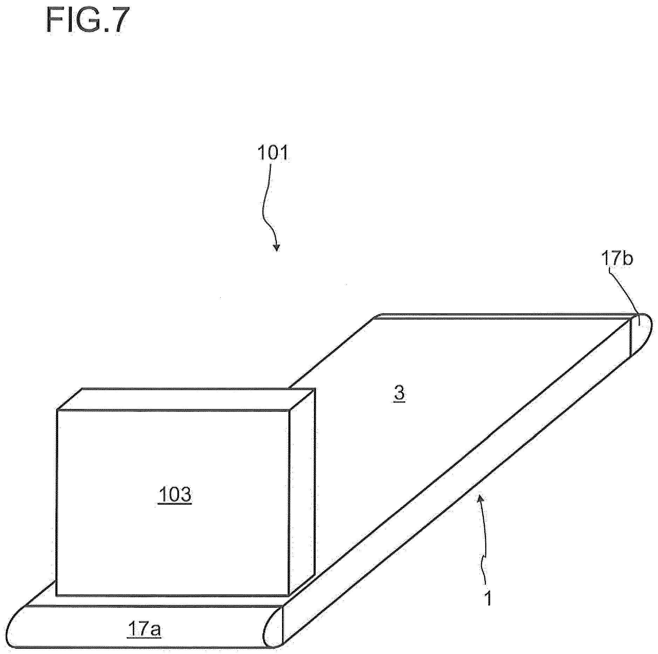

Figur 7 zeigt eine Teilansicht einer Lithium-Ionen-Batterie 101, bei der beispielhaft eine einzelne Lithium-Ionen-Zelle 103 auf einem Temperierelement 1 angeordnet ist. In einer bevorzugten Ausführungsform besitzt die Lithium-Ionen-Zelle 103 zumindest teilweise ein metallisches Gehäuse und steht mit diesem in Kontakt mit der thermisch leitenden Oberfläche 3 des Temperierelements 1. Dabei kann die Lithium-Ionen-Zelle 103 rein mechanisch mit dem Temperierelement 1 kontaktiert werden, beispielsweise indem ein zweites Temperierelement 1 von oben auf die Lithium-Ionen-Zelle 103 aufgesetzt und anschließend beide Temperierelemente 1 gegeneinander verspannt werden, so dass die Lithium-Ionen-Zelle 103 dazwischen gehalten wird. Alternativ kann die Lithium-Ionen-Zelle 103 mit einem geeigneten Kleber auf das Temperierelement 1 geklebt werden, wobei der Kleber einerseits elektrisch isolierend und andererseits thermisch leitend wirkt.

In einer konkreten Ausführungsform der Lithium-Ionen-Batterie werden zehn Lithium-Ionen-Zellen 103, die jeweils von einem Aluminiumgehäuse umgeben sind, miteinander verpresst und mit ihrem Boden auf ein Temperierelement 1 aufgesetzt, so dass eine optimale Wärmeableitung mit sehr gutem Wärmeübergang realisiert wird. Je nach Einbausituation kann auf der Oberseite der zehn Lithium-Ionen-Zellen 103 ein einfacher Rahmen zum Verspannen mit dem Temperierelement 1 vorgesehen werden, oder es wird ein zweites Temperierelement 1 aufgesetzt und mit dem ersten Temperierelement 1 verspannt.

Auf diese Weise kann eine Vielzahl von Lithium-Ionen-Batterien 101 zu einer größeren Einheit zusammengefügt werden, ohne dass es zu übermäßiger Aufheizung kommt. Die einzelnen Lithium-Ionen-Batterien 101 können entweder einzeln, parallel oder in Reihe mit einem Temperiermedium-Kreislauf verbunden werden.

In Ausführungsformen, in denen das Temperierelement 1 lediglich als Kühlelement eingesetzt wird, kann das entsprechende Kühlmedium in einen Niederdruckprozess geführt werden. Sofern das Temperierelement 1 neben einer Kühlung auch eine Erwärmung, beispielsweise der Lithium-Ionen-Batterie, bewirken soll, muss das entsprechende Temperiermedium in einem Hochdruckprozess geführt werden, was zu speziellen Anforderungen hinsichtlich der Auslegung des Temperierelements 1 führt. Insbesondere ist auf die Druckdichtigkeit des Materialübergangs zwischen metallischer Platte 7 und Kunststoffgrundkörper 11 zu achten. Dies kann vorteilhafterweise dadurch erreicht werden, dass sich der Kunststoff des Grundkörpers 11 beim Abkühlen während der Herstellung leicht zusammenzieht und einen vorgespannten Formschluss bildet. Die Sicke 19a bzw. die Nut 19b wirkt wie eine sog. Labyrinth-Dichtung und verhindert zusätzlich das Unterwandern der Materialtrenngrenze durch das Kältemittel.

In einer Ausführungsform betrifft die vorliegende Erfindung ein Verfahren zur Herstellung des Temperierelements 1. Hierzu wird für jeden vorgesehenen Kanal 13 ein Schieber in die untere Hälfte einer zweiteiligen Spritzgussform eingelegt. Danach wird die metallische Platte 7 von oben auf den oder die Schieber aufgelegt, wobei die Erhebungen 9 auf der metallischen Platte 7 nach oben weisen.

Die Oberfläche der metallischen Platte 7 kann in den Bereichen, die mit dem Kunststoff umspritzt werden, in geeigneter Weise vorbehandelt werden. Beispielsweise kann eine mechanische (Anschleifen) oder physikalische (Plasmaspritzen) Behandlung durchgeführt, oder die Oberfläche chemisch (Ätzen, Aufbringen eines Haftvermittlers) modifiziert werden, um einen verbesserten Anschluss des Kunststoffs an die metallische Platte 7 zu gewährleisten.

Um die metallische Platte 7 wird ein umlaufender Spalt zur Spritzgussform freigehalten. Nach dem Schließen der zweiteiligen Spritzgussform wird eine entsprechende Kunststoffschmelze durch mindestens zwei Anspritzpunkte, vorzugsweise vier Anspritzpunkte, in die Spritzgussform eingespritzt, wobei die Anspritzpunkte oberhalb der metallischen Platte 7 angeordnet sind. Durch den Einspritzdruck der Kunststoffschmelze wird die metallische Platte 7 fest auf den oder die Schieber gedrückt, so dass sich kein Spalt bildet, in den die Kunststoffschmelze eindringen kann. Die Kunststoffschmelze fließt durch den umlaufenden Spalt und die in der metallischen Platte 7 vorhandenen Aussparungen 21 in den unteren Teil der Spritzgussform und umschließt die Schieber im Wesentlichen vollständig, so dass die Kanäle 13 auf ihrer Oberseite von der metallischen Platte 7 und seitlich und unten vom Kunststoff des Grundkörpers 11 begrenzt werden.

Nach dem Aushärten des Kunststoffs und dem Entformen des Grundkörpers 11 werden die Schieber herausgezogen, so dass sie die Kanäle 13 freigeben. Dabei sind vorteilhafterweise die Einbauten 23 in Entformungsrichtung der Schieber angeordnet. Ein Versatz der Einbauten 23 kann jedoch ebenfalls realisiert werden, wenn ein geteilter Schieber verwendet wird, der in entgegen gesetzte Richtungen aus dem Grundkörper 11 herausgezogen wird.

Abschließend werden die Anschlussbauteile 17a, 17b, die vorzugsweise aus dem gleichen Kunststoff wie der Grundkörper 11 gebildet sind, an die Stirnseiten 15a, 15b angesetzt, insbesondere verschweißt, um so das fertige Temperierelement 1 zu bilden.

In einer weiteren Ausführungsform wird ein erfindungsgemäßes Temperierelement 1 in einem relativ kleinen Format hergestellt. Mehrere dieser kleinformatigen Temperierelemente 1 werden dann modular zu einem größeren Temperierelement zusammengesetzt. Die modulare Bauweise hat den Vorteil, dass mit einer kleinformatigen Standardgröße durch variables Fügen einzelner Temperierelemente 1 verschiedene Größen und Geometrien von Temperierelementen mit nur einer Grundform, beispielsweise eine Spritzgussform herstellbar sind. Die einzelnen kleinformatigen Temperierelemente 1 werden in geeigneter Weise zusammengefügt, vorteilhafterweise werden sie an ihren Längsseiten bzw. Stirnseiten miteinander verschweißt oder verklebt.

Das erfindungsgemäße Temperierelement 1 wird in der vorliegenden Erfindung hauptsächlich in Bezug auf seine Verwendung in einer Lithium-Ionen-Batterie beschrieben. Grundsätzlich ist es auch zur Temperierung von anderen temperierfähigen Bauteilen einsetzbar, beispielsweise zur Kühlung von Halbleitervorrichtungen, zur Temperierung von Brennstoffzellen oder zur Kühlung von elektrischen Anschlüssen.

### Bezugszeichenliste

- 1: Temperierelement
- 3: thermisch leitende Oberfläche
- 5: thermisch isolierende Oberfläche
- 7: metallische Platte
- 9: Erhebungen
- 11: Grundkörper aus Kunststoff
- 13: Kanal
- 15a, b: Stirnseiten
- 17a, b: Anschlussbauteile
- 19a: Sicke
- 19b: Nut
- 21: Aussparung
- 23: Einbauten
- 25: Einrichtung zum Verbinden

## Patentansprüche

1. Temperierelement (1) mit einer thermisch leitenden Oberfläche (3) und einer thermisch isolierenden Oberfläche (5), umfassend
- eine flächig ausgebildete metallische Platte (7), die an der thermisch leitenden Oberfläche (3) angeordnet ist und die an ihrer der thermisch leitenden Oberfläche (3) zugewandten Seite Erhebungen (9) aufweist
- einen Grundkörper (11) aus Kunststoff, der auf der Seite der thermisch isolierenden Oberfläche (5) angeordnet ist und der die metallische Platte (7) zumindest teilweise umgibt,
wobei zwischen der metallischen Platte (7) und dem Grundkörper (11) zumindest ein durchgehender Kanal (13) zur Aufnahme eines Temperiermediums in direktem Kontakt mit der metallischen Platte (7) derart ausgebildet ist, dass zumindest eine Wand des zumindest einen Kanals (13) durch die metallische Platte (7) gebildet wird und die übrigen Wände des zumindest einen Kanals (13) durch den Grundkörper (11) gebildet werden, wobei sich der zumindest eine Kanal (13) von einer Stirnseite (15a) zu einer gegenüberliegenden Stirnseite (15b) des Grundkörpers (11) erstreckt,
- zwei Anschlussbauteile (17a, 17b) aus Kunststoff, die jeweils an den Stirnseiten (15a, 15b) angeordnet sind und den zumindest einen Kanal (13) an einen Temperiermedium-Kreislauf anschließen,
wobei das Temperierelement (1) so ausgebildet ist, dass der Grundkörper (11) die metallische Platte (7) an ihrer der thermisch leitenden Oberfläche (3) zugewandten Seite zumindest in den Bereichen bedeckt, die keine Erhebungen (9) aufweisen, und dass der Grundkörper (11) die metallische Platte (7) randseitig zumindest teilweise umgibt.

2. Temperierelement (1) nach Anspruch 1, wobei die Erhebungen (9) in der thermisch leitenden Oberfläche (3) von dem Kunststoff des Grundkörpers (11) bedeckt sind.

3. Temperierelement (1) nach Anspruch 1, wobei die Erhebungen (9) in der thermisch leitenden Oberfläche (3) freiliegen.

4. Temperierelement (1) nach einem der vorhergehenden Ansprüche, wobei die metallische Platte (7) randseitig zumindest teilweise eine Sicke (19a) und/oder Nut (19b) aufweist.

5. Temperierelement (1) nach einem der vorhergehenden Ansprüche,
wobei die Erhebungen (9) auf der metallischen Platte (7) gleichmäßig verteilt sind, und/oder
wobei die Erhebungen (9) auf der metallischen Platte (7) so angeordnet sind, dass sie mit Bereichen eines zu temperierenden Gegenstands korrespondieren, die am intensivsten zu temperieren sind, und/oder
wobei die Erhebungen (9) auf der metallischen Platte (7) so angeordnet sind, dass sie mit dem zumindest einen Kanal (13) korrespondieren.

6. Temperierelement (1) nach einem der vorhergehenden Ansprüche, wobei in der metallischen Platte (7) in den Bereichen ohne Erhebungen (9) zumindest eine durchgehende Aussparung (21) vorgesehen ist, die von dem Kunststoff des Grundkörpers (11) durchdrungen ist.

7. Temperierelement (1) nach einem der vorhergehenden Ansprüche, wobei die metallische Platte (7) Aluminium enthält.

8. Temperierelement (1) nach einem der vorhergehenden Ansprüche, wobei der Kunststoff des Grundkörpers (11) aus Polyamiden oder Polyestern ausgewählt ist.

9. Temperierelement (1) nach einem der vorhergehenden Ansprüche, wobei der Kunststoff des Grundkörpers (11) Additive und/oder Verstärkungsstoffe enthält.

10. Temperierelement (1) nach einem der vorhergehenden Ansprüche, wobei in dem zumindest einen Kanal (13) Einbauten (23) zur Druckverteilung und/oder zur Verwirbelung des Temperiermediums vorgesehen sind.

11. Temperierelement (1) nach einem der vorhergehenden Ansprüche, wobei das Temperierelement (1) ferner zumindest eine Einrichtung (25) zum Verbinden mit einem weiteren Temperierelement (1) oder einem anderen Befestigungsmittel aufweist.

12. Verfahren zur Herstellung eines Temperierelements (1) nach einem der vorhergehenden Ansprüche, umfassend die Schritte:
- Einbringen zumindest eines Schiebers in eine erste Hälfte einer zweiteiligen Form,
- Bereitstellen einer flächig ausgebildeten metallischen Platte (7) in der ersten Hälfte der Form oberhalb des zumindest einen Schiebers, wobei die metallische Platte (7) an ihrer Oberseite Erhebungen (9) aufweist und wobei um die metallische Platte (7) herum ein umlaufender Spalt zu der Form freibleibt,
- Schließen der zweiteiligen Form mit einer zweiten Hälfte,
- Einbringen eines Kunststoffs in die Form durch zumindest zwei Einbringpunkte, die oberhalb der metallischen Platte (7) angeordnet sind, wobei durch das Einbringen die metallische Platte (7) auf den zumindest einen Schieber gedrückt wird und wobei der Kunststoff zumindest durch den umlaufenden Spalt in den unteren Teil der Form eingebracht wird und dabei einen Grundkörper (11) ausbildet,
- Entformen des Grundkörpers (11) mit der metallische Platte (7) und Entfernen des zumindest einen Schiebers, so dass zumindest ein durchgehender Kanal (13) gebildet wird,
- Anfügen von zwei Anschlussbauteilen (17a, 17b) aus Kunststoff jeweils an zwei gegenüberliegende Stirnseiten (15a, 15b), zwischen denen sich der zumindest ein Kanal (13) erstreckt.

13. Verwendung eines Temperierelements (1) nach einem der Ansprüche 1 bis 11 in einer Lithium-Ionen-Batterie (101).

14. Lithium-lonen-Batterie (101), umfassend
- zumindest eine Lithium-Ionen-Zelle (103), die zumindest teilweise von einer metallischen Umhüllung (105) umgeben ist, und
- zumindest ein Temperierelement (1) nach einem der Ansprüche 1 bis 11,
wobei die zumindest eine Lithium-Ionen-Zelle (103) so auf dem zumindest einen Temperierelement (1) angeordnet ist, dass die metallische Umhüllung (105) in Kontakt mit der thermisch leitenden Oberfläche (3) des Temperierelements (1) steht.

15. Lithium-Ionen-Batterie (101) nach Anspruch 14, ferner umfassend
- ein oder mehrere Befestigungsmittel (107), mit denen die zumindest eine Lithium-Ionen-Zelle (103) mit dem zumindest einen Temperierelement (1) verbunden wird, und/oder
- elektrische Anschlüsse (109) für die zumindest eine Lithium-Ionen-Zelle (103).

## Claims

1. A temperature-regulating element (1) having a thermally conductive surface (3) and a thermally insulating surface (5), comprising
- a metallic plate (7), which is designed to be planar and is arranged at the thermally conductive surface (3) and which has elevations (9) at its side facing the thermally conductive surface (3),
- a main body (11) composed of plastic, which is arranged on the side of the thermally insulating surface (5) and which at least partly surrounds the metallic plate (7),
at least one continuous channel (13) for receiving a temperature-regulating medium is formed between the metallic plate (7) and the main body (11) in direct contact with the metal plate (7) in such a way that at least one wall of the at least one channel (13) is formed by the metallic plate (7) and the remaining walls of the at least one channel (13) are formed by the main body (11), wherein the at least one channel (13) extends from one end face (15a) to an opposite end face (15b) of the main body (11),
- two connection components (17a, 17b) composed of plastic, which are respectively arranged at the end faces (15a, 15b) and connect the at least one channel (13) to a temperature-regulating medium circuit,
wherein the temperature-regulating element (1) is designed such that the main body (11) covers the metallic plate (7) at the side thereof facing the thermally conductive surface (3) at least in the regions which have no elevations (9), and that the main body (11) at least partly surrounds the metallic plate (7) marginally.

2. The temperature-regulating element (1) according to claim 1, wherein the elevations (9) are covered by the plastic of the main body (11) in the thermally conductive surface (3).

3. The temperature-regulating element (1) according to claim 1, wherein the elevations (9) are exposed in the thermally conductive surface (3).

4. The temperature-regulating element (1) according to any of the preceding claims, wherein the metallic plate (7) has marginally at least partly a bead (19a) and/or groove (19b).

5. The temperature-regulating element (1) according to any of the preceding claims,
wherein the elevations (9) are distributed uniformly on the metallic plate (7) and/or the elevations (9) are arranged on the metallic plate (7) such that they correspond to regions of an object to be temperature-regulated which are to be temperature-regulated the most intensively, and/or
wherein the elevations (9) are arranged on the metallic plate (7) such that they correspond to the at least one channel (13).

6. The temperature-regulating element (1) according to any of the preceding claims, wherein at least one continuous cutout (21) through which the plastic of the main body (11) penetrates is provided in the metallic plate (7) in the regions without elevations (9).

7. The temperature-regulating element (1) according to any of the preceding claims, wherein the metallic plate (7) contains aluminum.

8. The temperature-regulating element (1) according to any of the preceding claims, wherein the plastic of the main body (11) is selected from polyamides or polyesters.

9. The temperature-regulating element (1) according to any of the preceding claims, wherein the plastic of the main body (11) contains additives and/or reinforcing materials.

10. The temperature-regulating element (1) according to any of the preceding claims, wherein internals (23) for pressure distribution and/or for swirling of the temperature-regulating medium are provided in the at least one channel (13).

11. The temperature-regulating element (1) according to any of the preceding claims, wherein the temperature-regulating element (1) furthermore comprises at least one device (25) for connection to a further temperature-regulating element (1) or a different fixing means.

12. A method for producing a temperature-regulating element (1) according to any of the preceding claims, comprising the following steps:
- introducing at least one slide into a first half of a two-part mold,
- providing a metallic plate (7), which is designed to be planar, in the first half of the mold above the at least one slide, wherein the metallic plate (7) has elevations (9) at its top side and wherein a circumferential gap with respect to the mold remains free around the metallic plate (7),
- closing the two-part mold with a second half,
- introducing a plastic into the mold through at least two introduction points arranged above the metallic plate (7), wherein, as a result of the introducing, the metallic plate (7) is pressed onto the at least one slide and wherein the plastic is introduced at least through the circumferential gap into the lower part of the mold and forms a main body (11) in the process,
- releasing the main body (11) with the metallic plate (7) from the mold and removing the at least one slide, such that at least one continuous channel (13) is formed,
- attaching two connection components (17a, 17b) composed of plastic respectively to two opposite end faces (15a, 15b) between which the at least one channel (13) extends.

13. The use of a temperature-regulating element (1) according to any of claims 1 to 11, in a lithium-ion battery (101).

14. A lithium-ion battery (101), comprising
- at least one lithium-ion cell (103) which is at least partly surrounded by a metallic enclosure (105), and
- at least one temperature-regulating element (1) according to any of claims 1 to 11,
wherein the at least one lithium-ion cell (103) is arranged on the at least one temperature-regulating element (1) such that the metallic enclosure (105) is in contact with the thermally conductive surface (3) of the temperature-regulating element (1).

15. The lithium-ion battery (101) according to claim 14, furthermore comprising
- one or more fixing means (107) by which the at least one lithium-ion cell (103) is connected to the at least one temperature-regulating element (1), and/or
- electrical connections (109) for the at least one lithium-ion cell (103).

## Revendications

1. Elément d'équilibrage de température (1) avec une surface thermiquement conductrice (3) et une surface thermiquement isolante (5), comprenant
- une plaque métallique (7) de forme plate, qui est disposée sur la surface thermiquement conductrice (3) et qui présente des surélévations (9) sur son côté tourné vers la surface thermiquement conductrice (3),
- un corps de base (11) en matière plastique, qui est disposé sur le côté de la surface thermiquement isolante (5) et qui entoure au moins en partie la plaque métallique (7),
dans lequel au moins un canal continu (13) destiné à contenir un fluide d'équilibrage de la température en contact direct avec la plaque métallique (7) est formé entre la plaque métallique (7) et le corps de base (11), de telle manière qu'au moins une paroi dudit au moins un canal (13) soit formée par la plaque métallique (7) et que les autres parois dudit au moins un canal (13) soient formées par le corps de base (11), dans lequel ledit au moins un canal (13) s'étend d'un côté frontal (15a) à un côté frontal opposé (15b) du corps de base (11),
- deux pièces de raccordement (17a, 17b) en matière plastique, qui sont disposées respectivement sur les côtés frontaux (15a, 15b) et qui raccordent ledit au moins un canal (13) à un circuit de fluide d'équilibrage de la température,
dans lequel l'élément d'équilibrage de la température (1) est configuré de telle manière que le corps de base (11) recouvre la plaque métallique (7) sur son côté tourné vers la surface thermiquement conductrice (3) au moins dans les régions qui ne présentent pas de surélévations (9), et que le corps de base (11) entoure en périphérie au moins partiellement la plaque métallique (7).

2. Elément d'équilibrage de la température (1) selon la revendication 1, dans lequel les surélévations (9) dans la surface thermiquement conductrice (3) sont recouvertes par la matière plastique du corps de base (11) .

3. Elément d'équilibrage de la température (1) selon la revendication 1, dans lequel les surélévations (9) dans la surface thermiquement conductrice (3) sont découvertes.

4. Elément d'équilibrage de la température (1) selon l'une quelconque des revendications précédentes, dans lequel la plaque métallique (7) présente en périphérie au moins partiellement une moulure (19a) et/ou une rainure (19b).

5. Elément d'équilibrage de la température (1) selon l'une quelconque des revendications précédentes,
dans lequel les surélévations (9) sont uniformément réparties sur la plaque métallique (7), et/ou dans lequel les surélévations (9) sont disposées sur la plaque métallique (7), de telle manière qu'elles correspondent à des régions d'un objet dont la température doit être équilibrée, et/ou
dans lequel les surélévations (9) sont disposées sur la plaque métallique (7), de telle manière qu'elles correspondent audit au moins un canal (13).

6. Elément d'équilibrage de la température (1) selon l'une quelconque des revendications précédentes, dans lequel il est prévu dans la plaque métallique (7), dans les régions sans surélévations (9), au moins un évidement traversant (21), qui est rempli par la matière plastique du corps de base (11).

7. Elément d'équilibrage de la température (1) selon l'une quelconque des revendications précédentes, dans lequel la plaque métallique (7) contient de l'aluminium.

8. Elément d'équilibrage de la température (1) selon l'une quelconque des revendications précédentes, dans lequel la matière plastique du corps de base (11) est choisie parmi des polyamides ou des polyesters.

9. Elément d'équilibrage de la température (1) selon l'une quelconque des revendications précédentes, dans lequel la matière plastique du corps de base (11) contient des additifs et/ou des substances de renforcement.

10. Elément d'équilibrage de la température (1) selon l'une quelconque des revendications précédentes, dans lequel il est prévu dans ledit au moins un canal (13) des structures (23) pour la répartition de la pression et/ou pour provoquer la turbulence du fluide d'équilibrage de la température.

11. Elément d'équilibrage de la température (1) selon l'une quelconque des revendications précédentes, dans lequel l'élément d'équilibrage de la température (1) présente en outre au moins un dispositif (25) permettant de le relier à un autre élément d'équilibrage de la température (1) ou à un autre moyen de fixation.

12. Procédé de fabrication d'un élément d'équilibrage de la température (1) selon l'une quelconque des revendications précédentes, comprenant les étapes suivantes:
- introduire au moins un coulisseau dans une première moitié d'un moule en deux parties,
- préparer une plaque métallique de forme plate (7) dans la première moitié du moule au-dessus dudit au moins un coulisseau, la plaque métallique (7) présentant des surélévations (9) sur son côté supérieur et un espace périphérique restant libre par rapport au moule autour de la plaque métallique (7),
- fermer le moule en deux parties avec une deuxième moitié,
- introduire une matière plastique dans le moule par au moins deux points d'introduction, qui sont disposés au-dessus de la plaque métallique (7), dans lequel la plaque métallique (7) est pressée par cette introduction sur ledit au moins un coulisseau et dans lequel la matière plastique est introduite dans la partie inférieure du moule au moins par l'espace périphérique et forme de ce fait un corps de base (11),
- démouler le corps de base (11) avec la plaque métallique (7) et enlever ledit au moins un coulisseau, de telle manière qu'il se forme au moins un canal continu (13),
- ajouter deux pièces de raccordement (17a, 17b) en matière plastique respectivement sur deux côtés frontaux opposés (15a, 15b), entre lesquelles s'étend ledit au moins un canal (13).

13. Utilisation d'un élément d'équilibrage de la température (1) selon l'une quelconque des revendications 1 à 11 dans une batterie lithium-ions (101).

14. Batterie lithium-ions (101), comprenant
- au moins une cellule lithium-ions (103), qui est au moins en partie entourée par une enveloppe métallique (105), et
- au moins un élément d'équilibrage de la température (1) selon l'une quelconque des revendications 1 à 11, dans laquelle ladite au moins une cellule lithium-ions (103) est disposée sur ledit au moins un élément d'équilibrage de la température (1), de telle manière que l'enveloppe métallique (105) se trouve en contact avec la surface thermiquement conductrice (3) de l'élément d'équilibrage de la température (1).

15. Batterie lithium-ions (101) selon la revendication 14, comprenant en outre
- un ou plusieurs moyen(s) de fixation (107), avec lequel/lesquels ladite au moins une cellule lithium-ions (103) est reliée audit au moins un élément d'équilibrage de la température (1), et/ou
- des raccords électriques (109) pour ladite au moins une cellule lithium-ions (103).
